# EUROPEAN PATENT APPLICATION

(11) **EP 4 621 518 A1**
(43) Date of publication of application: **24.09.2025**
(21) Application number: 23891222.4
(22) Date of filing: 10.10.2023
(51) Int. Cl.: G05D 1/43, B66B 1/14, B66B 17/20

(54) **ROBOT CONTROL SYSTEM, ROBOT CONTROL METHOD, AND PROGRAM**

(30) Priority: 15.11.2022 JP 2022182407
(71) Applicant: TOYOTA JIDOSHA KABUSHIKI KAISHA, Toyota-shi Aichi 471-8571 (JP)
(72) Inventor: KURAHASHI Yukinori, Toyota-shi, Aichi 471-8571 (JP); ODA Shiro, Toyota-shi, Aichi 471-8571 (JP); MATSUI Takeshi, Toyota-shi, Aichi 471-8571 (JP)
(74) Representative: D Young & Co LLP
(86) International application number: PCT/JP2023/036670
(87) International publication number: WO 2024/106064

(57) **Abstract**

A robot control system according to the present embodiment is a robot control system that includes a plurality of mobile robots each having a longitudinal direction and a lateral direction in a top view. The robot control system includes a mobile robot (20A) that enters a preset standby region and stands by in the standby region (S1) after the mobile robot (20) has pivoted so that the lateral direction extends along a first direction, and a mobile robot (20B) that enters the standby region (S1) that the mobile robot (20A) has entered to stand by in a state in which the longitudinal direction extends along the first direction. Control may be performed by using a machine learning model generated through supervised learning or the like.

## Description

### Technical Field

The present disclosure relates to a robot control system, a robot control method, and a program.

### Background Art

Patent Literature 1 discloses a system in which a plurality of autonomous mobile bodies move by riding an elevator. This system determines an alighting order of the autonomous mobile bodies in accordance with a destination floor. The system rearranges the plurality of autonomous mobile bodies in a car in accordance with the alighting order.

### Citation List

### Patent Literature

Patent Literature 1:Japanese Patent No. 6308341

### Summary of Invention

When such mobile robots, such as autonomous mobile bodies, ride an elevator, the plurality of mobile robots can move efficiently by riding the elevator all at once. When the plurality of mobile robots ride an elevator, it is necessary to control the mobile robots so as to not come into contact with other mobile robots or the like. However, the mobile robots incorrectly detect their own position. Therefore, a problem exists in that a distance between the mobile robots is too short.

The present disclosure is devised in order to solve such a problem, and provides a robot control system, a robot control method, and a program that enables mobile robots to move efficiently.

A robot control system according to the present embodiment is a robot control system configured to control a plurality of mobile robots each having a longitudinal direction and a lateral direction in a top view, in which the robot control system: controls a first mobile robot configured to enter a preset standby region to stand by in the standby region, after the first mobile robot has pivoted so that the lateral direction extends along a first direction; and controls a second mobile robot configured to enter the standby region that the first mobile robot has entered to stand by in a state in which the longitudinal direction extends along the first direction.

In the above robot control system, a virtual bumper may be set for each of the first mobile robot and the second mobile robot so as to cause the first mobile robot and the second mobile robot to decelerate or stop when an object or a person has approached within a preset distance.

In the above robot control system, the mobile robots may each include wheels for allowing the mobile robots to move with the longitudinal direction as a front-rear direction.

In the above robot control system, an entrance/exit may be set at one end side of the standby region, the first mobile robot may enter the standby region by advancing along the first direction, the first mobile robot may pivot so that the lateral direction extends along the first direction after the first mobile robot has entered the standby region, and the second mobile robot may enter the standby region by advancing along the first direction after the first mobile robot has pivoted.

In the above robot control system, an entrance may be set at one end side of the standby region and an exit may be set at the other end side, the first mobile robot may enter the standby region by advancing along a second direction different from the first direction, the first mobile robot may pivot so that the longitudinal direction extends along the first direction after the first mobile robot has entered the standby region, the second mobile robot may enter the standby region by advancing along the second direction in a state in which the first mobile robot is disposed with the longitudinal direction of the first mobile robot extending along the first direction, and the first mobile robot may pivot so that the lateral direction extends along the first direction after the second mobile robot has entered the standby region.

In the above robot control system, the standby region may be a car of an elevator.

The above robot control system may include a host management apparatus configured to control the first mobile robot and the second mobile robot.

In the above robot control system, the first mobile robot may transmit a signal for controlling the second mobile robot.

In the above robot control system, the second mobile robot may transmit a signal for controlling the first mobile robot.

A robot control method according to the present embodiment is a robot control method executed by at least one computer for controlling a plurality of mobile robots each having a longitudinal direction and a lateral direction in a top view, the robot control method including: controlling a first mobile robot configured to enter a preset standby region to stand by in the standby region, after the first mobile robot has pivoted so that the lateral direction extends along a first direction; and controlling a second mobile robot configured to enter the standby region that the first mobile robot has entered to stand by in a state in which the longitudinal direction extends along the first direction.

In the above robot control method, a virtual bumper may be set for each of the first mobile robot and the second mobile robot so as to cause the first mobile robot and the second mobile robot to decelerate or stop when an object or a person has approached within a preset distance.

In the above robot control method, the mobile robots may each include wheels for allowing the mobile robots to move with the longitudinal direction as a front-rear direction.

In the above robot control method, an entrance/exit may be set at one end side of the standby region, the first mobile robot may enter the standby region by advancing along the first direction, the first mobile robot may pivot so that the lateral direction extends along the first direction after the first mobile robot has entered the standby region, and the second mobile robot may enter the standby region by advancing along the first direction after the first mobile robot has pivoted.

In the above robot control method, an entrance may be set at one end side of the standby region and an exit may be set at the other end side, the first mobile robot may enter the standby region by advancing along a second direction different from the first direction, the first mobile robot may pivot so that the longitudinal direction extends along the first direction after the first mobile robot has entered the standby region, the second mobile robot may enter the standby region by advancing along the second direction in a state in which the first mobile robot is disposed with the longitudinal direction of the first mobile robot extending along the first direction, and the first mobile robot may pivot so that the lateral direction extends along the first direction after the second mobile robot has entered the standby region.

In the above robot control method, the standby region may be a car of an elevator.

In the above robot control method, the computer may be a host management apparatus configured to control the first mobile robot and the second mobile robot.

In the above robot control method, the first mobile robot may transmit a signal for controlling the second mobile robot.

In the above robot control method, the second mobile robot may transmit a signal for controlling the first mobile robot.

A program according to the present embodiment is a program configured to cause a computer to execute a robot control method for controlling a plurality of mobile robots each having a longitudinal direction and a lateral direction in a top view, the robot control method including: controlling a first mobile robot configured to enter a preset standby region to stand by in the standby region, after the first mobile robot has pivoted so that the lateral direction extends along a first direction; and controlling a second mobile robot configured to enter the standby region that the first mobile robot has entered to stand by in a state in which the longitudinal direction extends along the first direction.

In the above program, a virtual bumper may be set for each of the first mobile robot and the second mobile robot so as to cause the first mobile robot and the second mobile robot to decelerate or stop when an object or a person has approached within a preset distance.

In the above program, the mobile robots may each include wheels for allowing the mobile robots to move with the longitudinal direction as a front-rear direction.

In the above program, an entrance/exit may be set at one end side of the standby region, the first mobile robot may enter the standby region by advancing along the first direction, the first mobile robot may pivot so that the lateral direction extends along the first direction after the first mobile robot has entered the standby region, and the second mobile robot may enter the standby region by advancing along the first direction after the first mobile robot has pivoted.

In the above program, an entrance may be set at one end side of the standby region and an exit may be set at the other end side, the first mobile robot may enter the standby region by advancing along a second direction different from the first direction, the first mobile robot may pivot so that the longitudinal direction extends along the first direction after the first mobile robot has entered the standby region, the second mobile robot may enter the standby region by advancing along the second direction in a state in which the first mobile robot is disposed with the longitudinal direction of the first mobile robot extending along the first direction, and the first mobile robot may pivot so that the lateral direction extends along the first direction after the second mobile robot has entered the standby region.

In the above program, the standby region may be a car of an elevator.

In the above program, the computer may be a host management apparatus configured to control the first mobile robot and the second mobile robot.

In the above program, the first mobile robot may transmit a signal for controlling the second mobile robot.

In the above program, the second mobile robot may transmit a signal for controlling the first mobile robot.

The present disclosure is able to provide a robot control system, a robot control method, and a program that enable mobile robots to move efficiently.

### Brief Description of Drawings

Fig. 1 is a schematic diagram showing an example of a mobile robot according to the present embodiment;
Fig. 2 is a control block diagram showing a control system of the mobile robot according to the present embodiment;
Fig. 3 is a diagram for describing a procedure of two mobile robots entering and exiting an elevator;
Fig. 4 is a diagram for describing a procedure of the two mobile robots entering and exiting the elevator;
Fig. 5 is a diagram for describing a procedure of the two mobile robots entering and exiting the elevator;
Fig. 6 is a diagram for describing a procedure of the two mobile robots entering and exiting the elevator;
Fig. 7 is a diagram for describing a procedure of the two mobile robots entering and exiting the elevator;
Fig. 8 is a diagram for describing a procedure of the two mobile robots entering and exiting the elevator;
Fig. 9 is a diagram for describing a procedure of the two mobile robots entering and exiting the elevator; and
Fig. 10 is a diagram showing a state in which four mobile robots are riding the elevator.

### Description of Embodiments

Hereinafter, the present invention will be explained through an embodiment of the invention, but the invention according to the claims is not limited to the following embodiment. Furthermore, all of the components described in the embodiment are not necessarily indispensable as a means for solving the problem.

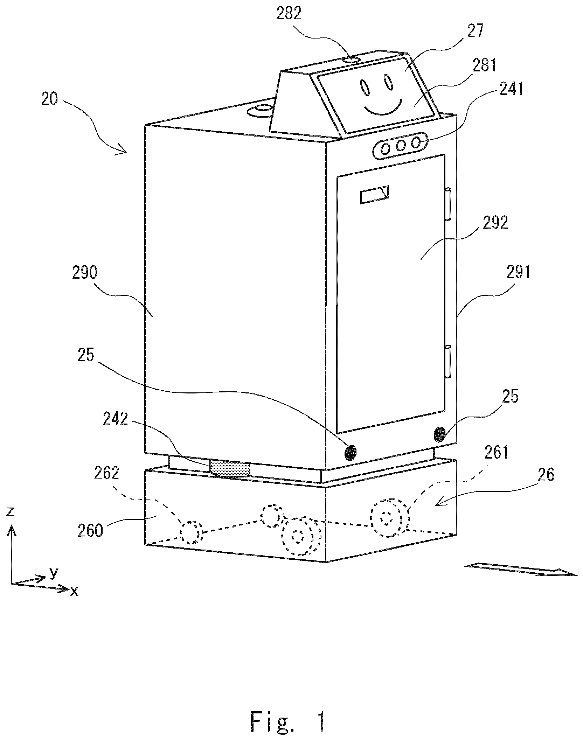

Fig. 1 is a perspective view showing a configuration of a mobile robot 20. The mobile robot 20 shown in Fig. 1 is one aspect of the mobile robot 20 but may have another configuration. Note that in Fig. 1, an x direction is a forward direction and rearward direction of the mobile robot 20, a y direction is a left-right direction of the mobile robot 20, and a z direction is the height direction of the mobile robot 20.

For example, the mobile robot 20 is a transport robot that performs transport of conveyed items as a task. The mobile robot 20 autonomously travels in order to transport conveyed items in a medical welfare facility such as a hospital, a rehabilitation center, a nursing facility, or an elderly care facility. A system according to the present embodiment can also be used in, for example, a commercial facility such as a shopping mall.

A user stores conveyed items in the mobile robot 20 and requests transportation. The mobile robot 20 moves autonomously to a set destination to transport the conveyed items. In other words, the mobile robot 20 executes a luggage transport task (hereinafter also simply referred to as a task). In the following description, a location where the conveyed items are loaded is referred to as a transport source and a location to where the conveyed items are delivered is referred to as a transport destination. For example, the user uses a communication terminal such as a tablet computer or a smartphone to input the transport destination and the like. In other words, the user may make a transport request by using a user terminal.

The mobile robot 20 moves autonomously to the transport destination, a transit point, or the like through autonomous movement control. In the following description, a plurality of mobile robots 20 are described as each performing movement control, but a host management apparatus that controls the plurality of mobile robots 20 may be provided.

For example, it is assumed that the mobile robot 20 moves in a general hospital having a plurality of medical departments. The mobile robot 20 transports equipment, consumables, medical instruments, and the like between the plurality of medical departments. For example, the mobile robot delivers conveyed items from a nurse station of one medical department to a nurse station of another medical department. Alternatively, the mobile robot 20 delivers conveyed items from a storage with equipment, medical instruments, and the like to a nurse station of a medical department. The mobile robot 20 also delivers medicine dispensed at a hospital pharmacy to a medical department, a patient scheduled to use the medicine, or the like.

Examples of conveyed items include medicine, consumables such as medicine bags, specimens, examination instruments, medical instruments, hospital food, equipment such as stationery, and the like. Medical devices include sphygmomanometers, blood transfusion pumps, syringe pumps, foot pumps, nurse call buttons, bed leaving sensors, foot pumps, low-pressure continuous inhalers, electrocardiogram monitors, drug injection controllers, enteral nutrition pumps, artificial respirators, cuff pressure gauges, touch sensors, aspirators, nebulizers, pulse oximeters, sphygmomanometers, artificial resuscitators, aseptic apparatuses, echo machines, and the like. Meals such as hospital food and examination meals may also be transported. Furthermore, the mobile robot 20 may transport used devices, used tableware, and the like. When the transport destination is on a different floor, the mobile robot 20 may move using an elevator or the like.

The mobile robot 20 includes a main body portion 290 and a carriage portion 260. The main body portion 290 is installed on the carriage portion 260. The main body portion 290 and the carriage portion 260 each have a rectangular parallelepiped casing, and each component is installed inside this casing. For example, a drive unit 26 is accommodated in the carriage portion 260.

The main body portion 290 is provided with a storage 291 that serves as a storage space and a door 292 that seals the storage 291. The storage 291 is provided with a plurality of shelves and availability thereof is managed per shelf. For example, the availability can be updated by disposing various sensors such as a weight sensor at each shelf. The mobile robot 20 moves autonomously to transport conveyed items stored in the storage 291 to a destination. The main body portion 290 may be equipped with a control box or the like (not shown) in the casing. Furthermore, the door 292 may be capable of being locked with an electronic key or the like. Upon arriving at a transport destination, a user unlocks the door 292 with an electronic key. Alternatively, the door 292 may be automatically unlocked when the mobile robot 20 arrives at the transport destination.

As shown in Fig. 1, front-rear distance sensors 241 and left-right distance sensors 242 are provided as a distance sensor group 24 on an exterior of the mobile robot 20. The mobile robot 20 measures a distance from peripheral objects in a front-rear direction of the mobile robot 20 through the front-rear distance sensors 241. The mobile robot 20 measures a distance from a peripheral object in a left-right direction of the mobile robot 20 through the left-right distance sensors 242.

For example, the front-rear distance sensors 241 are disposed on each of a front surface and a rear surface of the casing of the main body portion 290. The left-right distance sensors 242 are disposed on each of a left side surface and a right side surface of the casing of the main body portion 290. The front-rear distance sensors 241 and the left-right distance sensors 242 are, for example, ultrasonic distance sensors, laser rangefinders, or the like. The front-rear distance sensors 241 and the left-right distance sensors 242 detect a distance from a peripheral object. When the distance from the peripheral object detected by the front-rear distance sensors 241 or the left-right distance sensors 242 has become equal to or less than a distance threshold value, the mobile robot 20 decelerates or stops.

When a peripheral object has approached the mobile robot, a region where the mobile robot 20 decelerates or stops is assumed to be a virtual bumper region. In other words, the mobile robot 20 stops or decelerates when a peripheral object enters the virtual bumper region due to a relative movement between the peripheral object and the mobile robot 20. The virtual bumper region is a region that includes the mobile robot 20 and a surrounding region thereof in a top view.

The drive unit 26 is provided with drive wheels 261 and casters 262. The drive wheels 261 are wheels for allowing the mobile robot 20 to move frontward, rearward, leftward, and rightward. The casters 262 are trailing wheels that spin following the drive wheels 261 without a driving force being applied thereto. The drive unit 26 includes a drive motor (not shown) and drives the drive wheels 261.

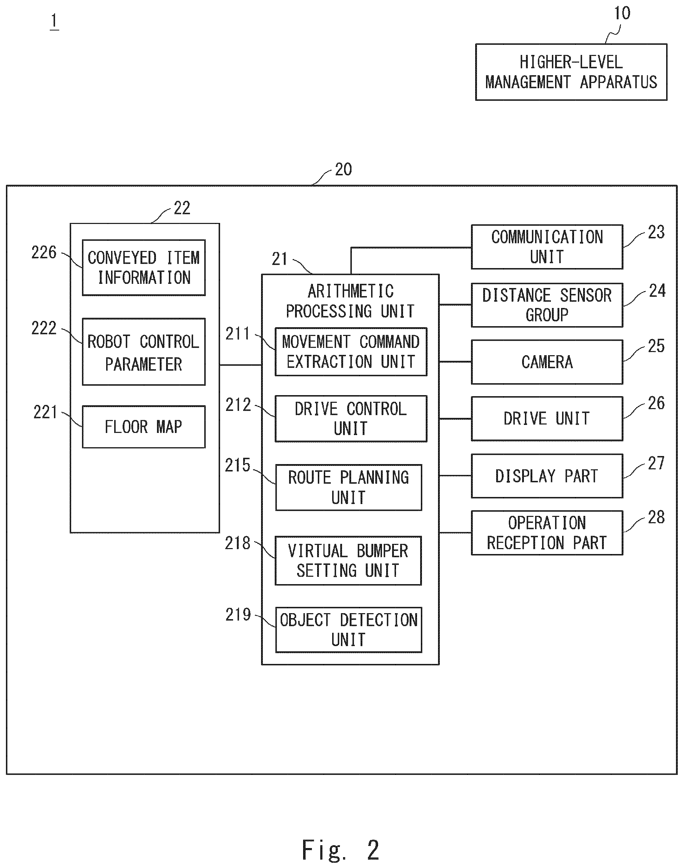

For example, the drive unit 26 supports, in the casing, two drive wheels 261 and two casters 262, each of which are in contact with a traveling surface. The two drive wheels 261 are arranged such that rotation axes thereof coincide with each other. Each drive wheel 261 is independently rotationally driven by a motor (not shown). The drive wheels 261 rotate in accordance with a control command value from a drive control unit 212 in Fig. 2. Each of the casters 262 is a trailing wheel that is provided such that a pivot axle extending in a vertical direction from the drive unit 26 pivotally supports the wheel at a position away from a rotation axle of the wheel, and thus follows a movement direction of the drive unit 26.

For example, the mobile robot 20 moves straight ahead when the two drive wheels 261 are rotated in the same direction at the same rotation speed, and pivots around a vertical axis extending through substantially a center of the two drive wheels 261 when the two drive wheels 261 are rotated at the same rotation speed in the opposite directions. By rotating the two drive wheels 261 in the same direction at different rotation speeds, the mobile robot 20 can advance while turning left or right. For example, the mobile robot 20 can make a right turn, by making the rotation speed of the left drive wheel 261 higher than the rotation speed of the right drive wheel 261. In contrast, the mobile robot 20 can make a left turn, by making the rotation speed of the right drive wheel 261 higher than the rotation speed of the left drive wheel 261. That is, the mobile robot 20 can travel straight, pivot, turn right or left, and the like in any direction by controlling the rotation direction and the rotation speed of each of the two drive wheels 261.

In the mobile robot 20, a display part 27 and an operation interface 281 are provided on an upper surface of the main body portion 290. The operation interface 281 is displayed on the display part 27. An operation reception part 28 can receive an instruction input from the user, when the user performs a touch operation on the operation interface 281 displayed on the display part 27. An emergency stop button 282 is provided on an upper surface of the display part 27. The emergency stop button 282 and the operation interface 281 function as the operation reception part 28.

The display part 27 is, for example, a liquid crystal panel that displays a character's face as an illustration, presents information relating to the mobile robot 20 as text or as an icon, or the like. It is possible to give a surrounding observer the impression that the display part 27 is a pseudo face portion, when displaying a character's face on the display part 27. It is also possible to use the display part 27 or the like installed in the mobile robot 20 as a user terminal.

Cameras 25 are installed on the front surface of the main body portion 290. Here, the two cameras 25 function as stereo cameras. **In** other words, the two cameras 25 having the same angle of view are disposed so as to be horizontally separated from each other. An image captured by each camera 25 is output as image data. It is possible to calculate a distance from a subject, a size of the subject, and the like based on the image data of the two cameras 25. An arithmetic processing unit 21 can detect a person, an obstacle, or the like in front of the mobile robot 20 in the movement direction, by analyzing the images of the cameras 25. When a person, an obstacle, or the like is present in front of the mobile robot 20 in an advancing direction, the mobile robot 20 moves along a route while avoiding these. The image data of the cameras 25 is transmitted to the host management apparatus or the like.

The mobile robot 20 recognizes peripheral objects, identifies its own position, and the like, by analyzing the image data output by the cameras 25, detection signals output by the front-rear distance sensors 241 and the left-right distance sensors 242, and the like. The cameras 25 capture images in front of the mobile robot 20 in the advancing direction. As shown in the drawing, the mobile robot 20 assumes a side at which the cameras 25 are installed as the front thereof. That is, during normal movement, the advancing direction is the front of the mobile robot 20, as shown by an arrow.

In the top view (XY plan view), the mobile robot 20 is shaped to have a longitudinal direction and a lateral direction. For example, in the top view, the mobile robot 20 has a rectangular shape. To be specific, in Fig. 1, the X direction is the longitudinal direction and the Y direction is the lateral direction. Therefore, the front-rear direction is the longitudinal direction of the mobile robot 20 and the left-right direction is the lateral direction of the mobile robot 20 with the movement direction caused by the rotation of the wheels as reference.

A control system of the mobile robot 20 is disposed in the main body portion 290 of the mobile robot 20. The control system of the mobile robot 20 will be described with reference to Fig. 2. Fig. 2 is a control block diagram showing a control system 1 for the mobile robot 20. The control system 1 includes a host management apparatus 10 and the mobile robot 20. Note that the control system 1 includes a plurality of mobile robots 20, but only one mobile robot 20 is shown in Fig. 2 for the sake of simplification. The plurality of mobile robots 20 have similar configurations.

The mobile robot 20 includes the arithmetic processing unit 21, a storage unit 22, a communication unit 23, proximity sensors (for example, the distance sensor group 24), the cameras 25, the drive unit 26, the display part 27, and the operation reception part 28. Note that Fig. 2 shows only typical processing blocks included in the mobile robot 20, but the mobile robot 20 also includes many other processing blocks that are not shown.

The communication unit 23 is a communication interface for performing communication with other mobile robots, the host management apparatus 10, and the like. The communication unit 23 communicates with the host management apparatus 10 and the like using, for example, a wireless signal. In this case, the host management apparatus 10 is provided so as to be able to communicate with the mobile robot 20 through a wireless LAN or the like. The mobile robot 20 and the host management apparatus 10 transmit and receive various types of data. The mobile robot 20 may move based on the various types of data from the host management apparatus 10. In other words, a part of processing to be described below may be performed at the host management apparatus 10. The mobile robot 20 can perform communication with other mobile robots directly or via the host management apparatus 10 or the like.

The host management apparatus 10 is a computer including a processor, a memory, and the like, and functions as a server apparatus that collects data from the plurality of mobile robots 20. For example, the host management apparatus 10 can be implemented as an apparatus capable of executing a program, such as a central processing unit (CPU) of a computer. Various functions can also be realized by the program. The host management apparatus 10 performs processing for controlling the mobile robot 20, based on data from the mobile robot 20. Therefore, a part of the processing to be described below may be implemented at the host management apparatus 10.

The distance sensor group 24 is, for example, proximity sensors, and outputs proximate object distance information indicating a distance from an object or a person that is present in a surrounding area of the mobile robot 20. The distance sensor group 24 includes range sensors such as LiDAR sensors. By scanning an emission direction of an optical signal, the distance from peripheral objects can be measured. Further, a peripheral object may be recognized from point cloud data detected by a range sensor or the like. The cameras 25, for example, capture an image for grasping a situation of the surrounding area of the mobile robot 20. The cameras 25 can, for example, also capture an image of a position marker provided on a ceiling of a facility or the like. The mobile robot 20 may be caused to grasp its own position by using this position marker.

The drive unit 26 drives the drive wheels 261 (see Fig. 1) provided on the mobile robot 20. Note that the drive unit 26 may include an encoder or the like that detects a rotation speed of the drive wheels, the drive motors thereof, or the like. The position of the mobile robot 20 (current position) may be estimated in accordance with an output of the encoder. The mobile robot 20 detects its own current position and transmits its own current position to other mobile robots 20 or the like. The mobile robot 20 estimates its own position on a floor map 221 through odometry or the like.

The display part 27 and the operation reception part 28 are realized through a touch panel display. The display part 27 displays a user interface screen that serves as the operation reception part 28. The display part 27 may display information indicating a destination of the mobile robot 20 and a state of the mobile robot 20. The operation reception part 28 receives an operation from the user. The operation reception part 28 includes various switches provided on the mobile robot 20 in addition to the user interface screen displayed on the display part 27.

The arithmetic processing unit 21 performs arithmetic operations used for controlling the mobile robot 20. For example, the arithmetic processing unit 21 can be implemented as an apparatus capable of executing a program, such as a central processing unit (CPU) of a computer. Various functions can also be realized by the program. The arithmetic processing unit 21 includes a movement command extraction unit 211, the drive control unit 212, a route planning unit 215, a virtual bumper setting unit 218, and an object detection unit 219. Note that Fig. 2 shows only typical processing blocks included in the arithmetic processing unit 21, but the arithmetic processing unit 21 also includes processing blocks that are not shown.

The route planning unit 215 performs route planning of the mobile robot 20. When the user inputs a transport request, the route planning unit 215 performs route planning for transporting the conveyed items to a transport destination (destination) based on transport request information. The route planning unit 215 searches for a route from the current location to the transport destination. For example, the route planning unit 215 searches for a route from the current location to the transport destination by referring to the floor map 221 described below. When there is a transit point before the destination, the route planning unit 215 searches for a route from the current location to the transit point and a route from the transit point to the destination. For example, when transporting a plurality of conveyed items to different transport destinations at the same time, the transport destination of the conveyed items to be delivered first is set as a transit point.

The route planning unit 215 sets passing points along the route. A point of departure is the current position of the mobile robot 20, the transport destination of an immediately preceding transport task, a point of reception of the conveyed items, or the like. The destination is the transport destination of the conveyed items, a standby place, a charging place, or the like. The route planning unit 215 sets passing points on the floor map 221.

The route planning unit 215 may perform route planning in accordance with a congestion status of a facility. For example, when the congestion status of the facility is detected by a monitoring camera or the like, the route planning unit 215 searches for a route so as to avoid a congested area. With this, it is possible to move efficiently. The host management apparatus 10 may execute at least a part of processing of the route planning unit 215.

The movement command extraction unit 211 extracts a movement command from a control signal. For example, the movement command includes information relating to the next passing point. For example, the control signal may include coordinates of each passing point, information relating to a passing order of the passing points, and the like. The movement command extraction unit 211 extracts these pieces of information as the movement command.

The movement command may include information indicating that movement to the next passing point has become possible. When a width of a passage is narrow, the mobile robots 20 may not be able to pass by each other. There is also a case in which the passage cannot be used temporarily. In such a case, the control signal includes a command to stop the mobile robot 20 at a passing point before the location at which the mobile robot 20 should stop. After another mobile robot 20 has passed or after movement in the passage has become possible, the host management apparatus or the like outputs a control signal informing the mobile robot 20 that movement has become possible. With this, the mobile robot 20 that has been temporarily stopped resumes movement.

The drive control unit 212 controls the drive unit 26 so as to move the mobile robot 20, based on the movement command given from the movement command extraction unit 211. For example, the drive unit 26 includes the drive wheels 261 that rotate in accordance with the control command value from the drive control unit 212. The movement command extraction unit 211 extracts the movement command such that the mobile robot 20 moves toward a passing point received from the host management apparatus 10. The drive unit 26 rotationally drives the drive wheels 261. The mobile robot 20 moves autonomously toward the next passing point. In this way, the mobile robot 20 sequentially passes the passing points and arrives at the transport destination. The mobile robot 20 may estimate its own position and transmit a signal indicating that the mobile robot 20 has passed the passing point to the host management apparatus 10. With this, the host management apparatus 10 can manage the current position, a transport status, and the like of each mobile robot 20.

The virtual bumper setting unit 218 sets the virtual bumper region for the mobile robot 20. As described above, the virtual bumper region is the region including the mobile robot 20 and its surroundings. The distance threshold value for setting the virtual bumper is set as a robot control parameter 222 to be described below. Therefore, the virtual bumper setting unit 218 sets a region within a predetermined distance from an external shape of the mobile robot 20 as the virtual bumper region. The virtual bumper setting unit 218 sets the virtual bumper region in an XY plane (horizontal plane).

Furthermore, the virtual bumper setting unit 218 can set the virtual bumper region to be adjustable. For example, the virtual bumper setting unit 218 may change a size, a shape, and the like of the virtual bumper region in accordance with a movement speed, the movement direction, a position on the map, and the like of the mobile robot 20. For example, when the mobile robot 20 is pivoting in place, the virtual bumper setting unit 218 sets, as the virtual bumper region, a circle having a pivot center as its center and a radius corresponding to a pivot radius.

The object detection unit 219 detects that a peripheral object is present within the virtual bumper region. The object detection unit 219 can detect the presence or absence of a peripheral object in accordance with a detection result from a distance sensor. When the object detection unit 219 detects that a peripheral object is present within the virtual bumper region, the object detection unit 219 outputs a detection signal to the drive control unit 212.

The storage unit 22 stores the floor map 221, the robot control parameter 222, and conveyed item information 226. Fig. 2 shows only a part of the information stored in the storage unit 22, and the storage unit 22 also includes information other than the floor map 221, the robot control parameter 222, and the conveyed item information 226 shown in Fig. 2.

The floor map 221 is map information about a facility in which the mobile robot 20 moves. The floor map 221 may be created in advance, may be generated from information obtained from the mobile robot 20, and may be generated by adding map correction information generated from the information obtained from the mobile robot 20 to a basic map created in advance. The floor map 221 need not be map information about the entire facility, but may be map information that partially includes a region in which the mobile robot 20 is scheduled to move. The floor map 221 includes information relating to walls, doors, stairs, elevators, and the like of the facility.

The robot control parameter 222 is a parameter for operating the mobile robot 20. The robot control parameter 222 includes, for example, a distance threshold value for the distance from a peripheral object. For example, the robot control parameter 222 includes information indicating the shape, the size, and the like of the virtual bumper region. When the virtual bumper region is set to be adjustable, the robot control parameter 222 includes information relating to a plurality of settings. Furthermore, the robot control parameter 222 includes an upper limit value of the speed of the mobile robot 20.

The conveyed item information 226 includes information about contents (type) of the conveyed items, the transport source, the transport destination, and the like. The conveyed item information may include information indicating a status, such as transporting, before transporting (before loading), and "transported". These pieces of information are associated with each conveyed item in the conveyed item information 226.

The drive control unit 212 causes the mobile robot 20 to decelerate or stop in accordance with the detection signal from the object detection unit 219. In other words, the drive control unit 212 refers to the robot control parameter 222, and stops or decelerates the operation of the mobile robot 20 in response to a distance indicated by distance information obtained from the distance sensor group 24 has fallen below the distance threshold value. When a peripheral object has relatively approached the mobile robot 20 and has entered the virtual bumper region, the mobile robot 20 decelerates or stops. In this way, contact can be prevented when other mobile robots, people, or the like are present near the mobile robot 20.

The drive control unit 212 controls the drive unit 26 such that the mobile robot 20 travels at a speed equal to or lower than the upper limit value of the speed of the mobile robot 20. The drive control unit 212 limits the rotation speed of the drive wheels such that the mobile robot 20 does not move at a speed equal to or higher than the upper limit value of the speed of the mobile robot 20.

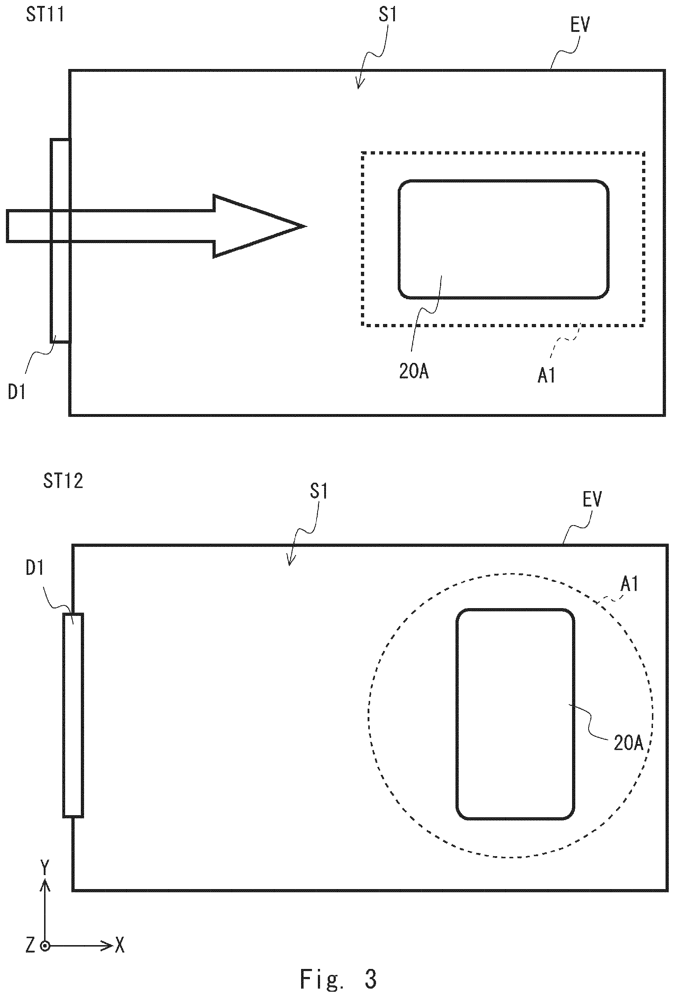

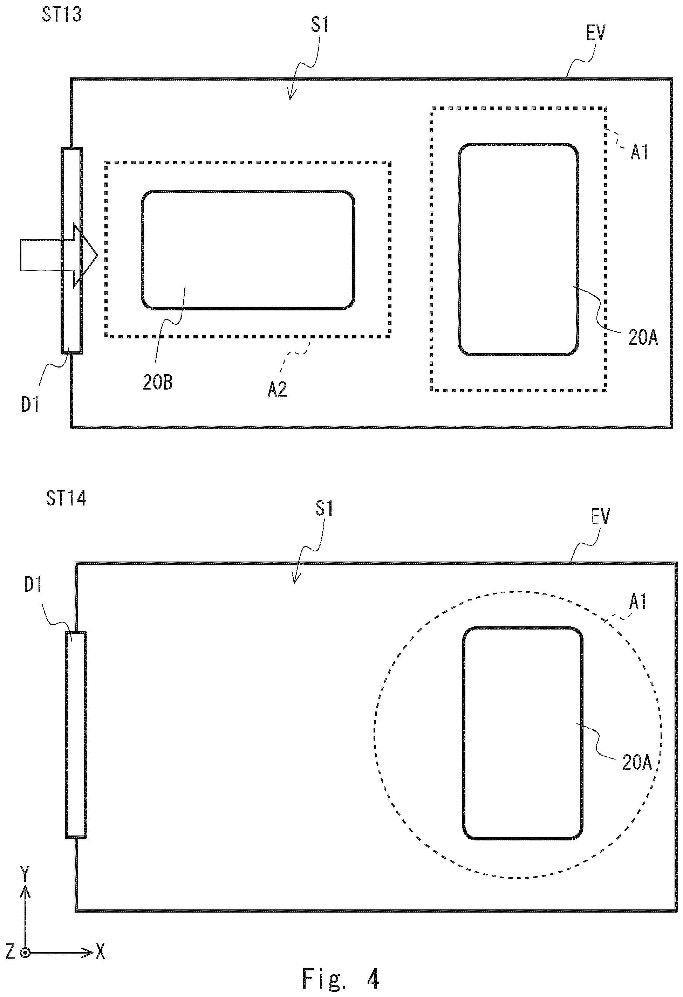

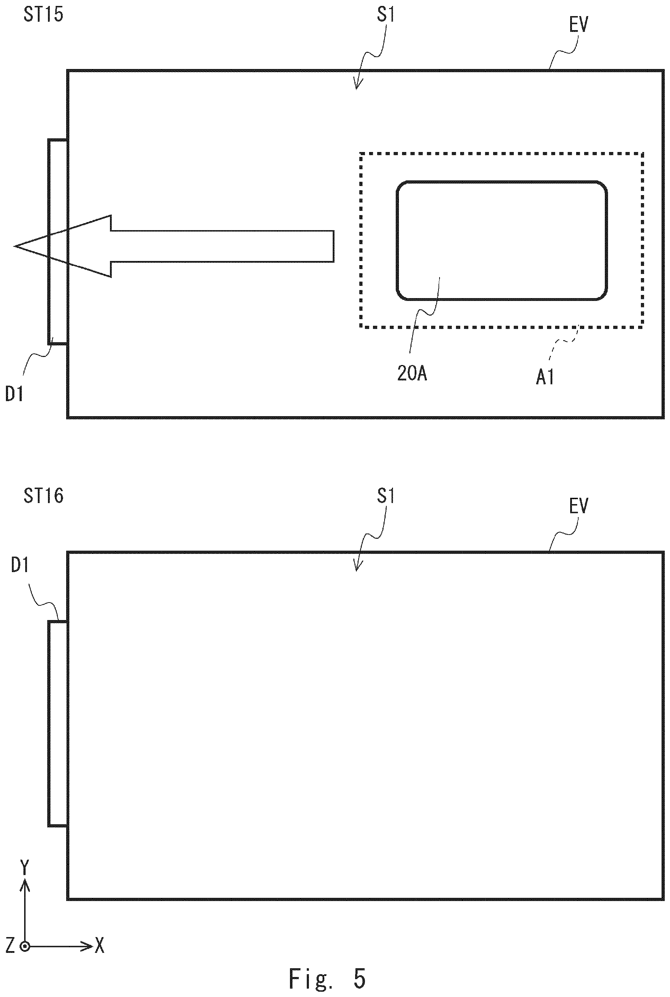

The mobile robot 20 can move by using an elevator. In other words, the mobile robot 20 can move to a different floor by riding the elevator. Furthermore, a plurality of mobile robots 20 can simultaneously ride the elevator. Hereinafter, procedures ST11 to ST16 of two mobile robots 20 getting on and off one elevator will be described with reference to Fig. 3 to Fig. 5. Fig. 3 to Fig. 5 are top views showing an inside of a car of an elevator EV. Fig. 3 to Fig. 5 show the two mobile robots 20 as mobile robots 20A and 20B.

As shown in Fig. 3 to Fig. 5, the elevator EV is provided with a door D1. The door D1 opens and closes when the elevator EV stops at any floor. The door D1 is provided at an end portion at the -X side of the elevator EV. The mobile robots 20A and 20B enter and exit the elevator EV through the door D1. A region inside the elevator EV is a standby region S1. The standby region S1 corresponds to a space of the car of the elevator EV. The door D1 is an entrance/exit to and from the standby region S1. While the mobile robots 20A and 20B are standing by in the standby region S1, the mobile robots 20A and 20B move to a destination floor due to the elevator EV ascending or descending. In the top view, the standby region S1 is rectangular.

The elevator EV has a size allowing the two mobile robots 20A and 20B to ride. Standby positions of the two mobile robots 20A and 20B are set in the standby region S1. The mobile robots 20A and 20B have the same shape since the mobile robots 20A and 20B are the same type of mobile robot. In the top view, the mobile robots 20A and 20B are rectangular. For example, in ST11 of Fig. 3, the X direction is the longitudinal direction and the Y direction is the lateral direction of the mobile robot 20A. As described in Fig. 1, the front-rear direction of the mobile robot 20A is the longitudinal direction and the left-right direction is the lateral direction. That is, a size of the mobile robot 20A in the front-rear direction is larger than a size in the left-right direction.

A virtual bumper region A1 is set for the mobile robot 20A. When a peripheral object is detected in the virtual bumper region A1, the mobile robot 20A decelerates or stops. As described below, the virtual bumper region A1 has a different shape when moving straight ahead and when pivoting. Similarly, a virtual bumper region A2 is set for the mobile robot 20B. When a peripheral object is detected in the virtual bumper region A2, the mobile robot 20B decelerates or stops. As described below, the virtual bumper region A2 has a different shape when moving straight ahead and when pivoting. When pivoting, the virtual bumper regions A1 and A2 are circular. When performing an operation other than pivoting, the virtual bumper regions A1 and A2 are rectangular.

Hereinafter, a case will be described in which the mobile robot 20B gets on the elevator EV after the mobile robot 20A has gotten on the elevator EV. First, the mobile robot 20A passes through the door D1 and enters the elevator EV (ST11). At this time, the mobile robot 20A is moving straight ahead in the +X direction in a state in which the X direction is the longitudinal direction. The mobile robot 20A advances to the most inner side of the elevator EV, in other words, to an end at the +X side. When the mobile robot 20A is moving straight ahead, the virtual bumper region A1 of the mobile robot 20A is rectangular with the X direction as the longitudinal direction in the top view.

When the mobile robot 20A moves to a predetermined standby position in the elevator EV, the mobile robot 20A pivots in place (ST12). In other words, the left and right drive wheels 261 rotate in opposite directions at the same rotation speed. The mobile robot 20A rotates 90° around a pivot axis parallel to the Z direction so that the longitudinal direction of the mobile robot 20A extends along the Y direction. The mobile robot 20A pivots until the longitudinal direction of the mobile robot 20A is the Y direction and the lateral direction is the X direction. When pivoting, the virtual bumper region A1 is circular with the pivot axis as its center. When the mobile robot 20A has rotated 90°, the drive wheels stop operating. The mobile robot 20A stands by in the state shown in ST12.

When the mobile robot 20A is stopped, the mobile robot 20B passes through the door D1 and enters the elevator EV (ST13). The mobile robot 20B enters the standby region S1 by advancing along the Y direction in a state in which the mobile robot 20A is disposed with the longitudinal direction thereof extending along the Y direction. At this time, the mobile robot 20B is moving straight ahead in the +X direction in a state in which the X direction is the longitudinal direction. When moving straight ahead, the virtual bumper region A2 of the mobile robot 20B is rectangular with the X direction as the longitudinal direction in the top view. Since the mobile robot 20A is stopped, the virtual bumper region A1 is rectangular with the Y direction as the longitudinal direction. When the mobile robot 20B moves straight ahead to a predetermined standby position, the mobile robot 20B stops. When the mobile robots 20A and 20B get on the elevator EV, the elevator EV ascends or descends. While the elevator EV is ascending or descending, the mobile robot 20A stands by in a state in which the lateral direction of the mobile robot 20A extends along the X direction and the mobile robot 20B stands by in a state in which the longitudinal direction of the mobile robot 20B extends along the X direction. In other words, the mobile robot 20A and the mobile robot 20B are oriented differently from each other at a 90° angle.

When the elevator EV arrives at the destination floor of the mobile robot 20B, the door D1 opens. The mobile robot 20B then moves straight ahead in the -X direction. The mobile robot 20B exits the elevator EV through the door D1 (ST14). The mobile robot 20A pivots while or after the mobile robot 20B exits. When pivoting, the virtual bumper region A1 of the mobile robot 20A is circular.

The mobile robot 20A then moves straight ahead in the -X direction after the mobile robot 20A pivots 90° (ST15). In other words, the mobile robot 20A moves in the -X direction in a state in which the longitudinal direction has become parallel to the X direction. The virtual bumper region A1 of the mobile robot 20A is rectangular. The mobile robot 20A exits the elevator EV through the door D1 (ST16).

In this way, the mobile robot 20A enters the preset standby region S1. The mobile robot 20 A then stands by in the standby region S1 after pivoting so that the lateral direction of the mobile robot 20A extends along the X direction. The mobile robot 20B enters the standby region S1 that the mobile robot 20A has entered. The mobile robot 20B stands by in a state in which the longitudinal direction extends along the X direction. The lateral direction of the mobile robot 20A and the longitudinal direction of the mobile robot 20B are parallel. The two mobile robots 20A and 20B are oriented differently from each other at a 90° angle. In this way, it is possible to prevent the mobile robot 20A and the mobile robot 20B from approaching each other.

Since positional errors occur in the autonomous movement of the mobile robots 20A and 20B, the standby positions of the mobile robot 20A and the mobile robot 20B shift out of place with each elevator ride. Therefore, there is a case in which the mobile robot 20A and the mobile robot 20B approach each other more than an expected distance. The distance between the robots can be prevented from being smaller than a threshold value distance in such a case as well. The distance between the mobile robot 20A and the mobile robot 20B can be made wider. With this, contact between the mobile robots can be prevented. It is also possible to prevent the robots from stopping or decelerating due to the virtual bumper function and the like. Furthermore, the plurality of mobile robots 20 can ride the elevator even when an area of the internal space of the elevator EV is small.

The mobile robot 20A that has first entered the standby region S1 is caused to pivot. With this, the mobile robot 20B that enters the standby region S1 afterward is oriented differently from the mobile robot 20A that is already standing by at a 90° angle. The mobile robot 20B can move straight ahead at an orientation different from the mobile robot 20A at a 90° angle. The mobile robots 20A and 20B can efficiently enter and exit the elevator EV. It is possible to omit the pivot operation of the mobile robot 20B. A difference in the orientation between the mobile robot 20A and the mobile robot 20B is not limited to 90°. The longitudinal direction of the mobile robot 20A should be parallel to the longitudinal direction of the mobile robot 20B in the top view.

Note that the mobile robot 20A and the mobile robot 20B may get on the elevator EV on the same floor or may get on the elevator EV on different floors. When the mobile robot 20A and the mobile robot 20B get on the elevator EV on different floors, the mobile robot 20A may perform the pivot operation in ST12 while the elevator EV is ascending or descending. This makes it possible to move efficiently since travel time is reduced.

The mobile robot 20A and the mobile robot 20B may get off the elevator EV on the same floor or may get off the elevator EV on different floors. When the mobile robot 20A and the mobile robot 20B get off the elevator EV on different floors, the mobile robot 20A may perform the pivot operation in ST14 while the elevator is ascending or descending. This makes it possible to move efficiently since travel time is reduced.

The mobile robot 20A may perform the pivot operation in ST12 at the moment the mobile robot 20A has detected that the mobile robot 20B enters the elevator EV. For example, the host management apparatus 10 or the mobile robot 20B may transmit, to the mobile robot 20A, a signal indicating that the mobile robot 20B enters the elevator EV. Alternatively, the mobile robot 20B entering the elevator EV may be detected by the various sensors provided on the mobile robot 20A. A user or the like of the facility may also get on the elevator EV.

Note that in the above description, the operations in the car of the elevator EV is shown, but the above operation can be performed even in a region other than the elevator. In other words, the standby region in which the mobile robot 20A pivots and stands by is not limited to the car of the elevator EV. For example, a preset charging region, parking region, or the like can be used as the standby region S1. With this, the distance between the mobile robots standing by can be made wider.

The shape of the virtual bumper region changes when pivoting and moving straight ahead. For example, the virtual bumper region is circular when pivoting, and the shape of the virtual bumper area is the external shape of the mobile robot 20 enlarged by the threshold distance when moving straight ahead. In this way, contact with peripheral objects can be prevented, since the virtual bumper region can be appropriately set.

The pivot operation of the mobile robot 20A may be performed at a timing when the mobile robot 20A has entered the standby region S1 or may be performed at a timing when it has been detected that the mobile robot 20B gets on the elevator EV. For example, the mobile robot 20A may detect the mobile robot 20B getting on the elevator EV, based on the detection result from the cameras 25, the distance sensor group 24, or the like. Alternatively, the host management apparatus 10 may transmit, to the mobile robot 20A, a signal indicating that the mobile robot 20B gets on the elevator EV.

### Modified Example

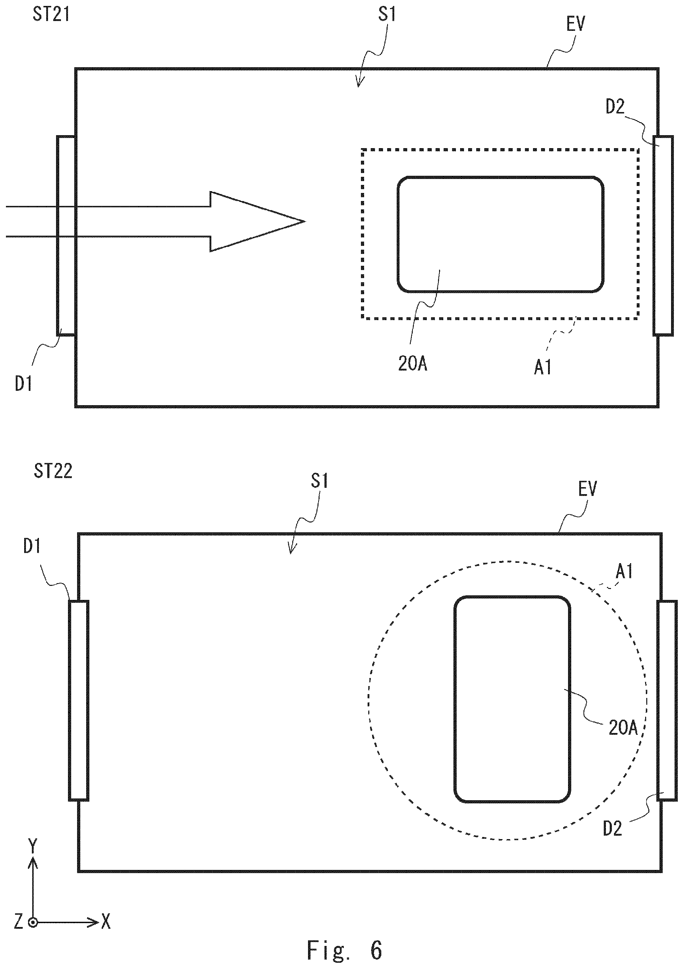

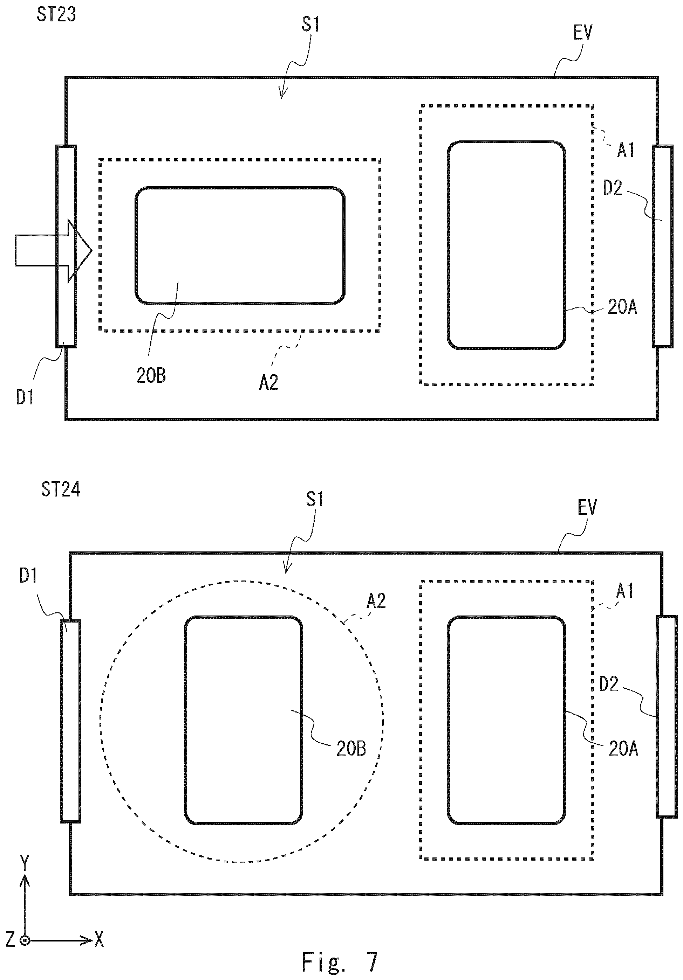

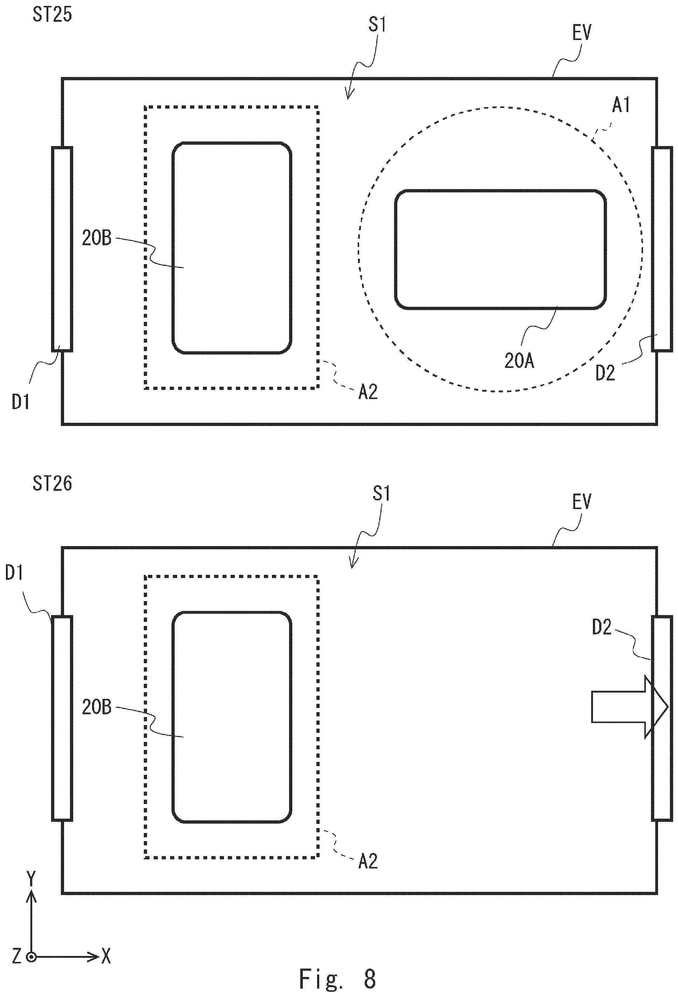

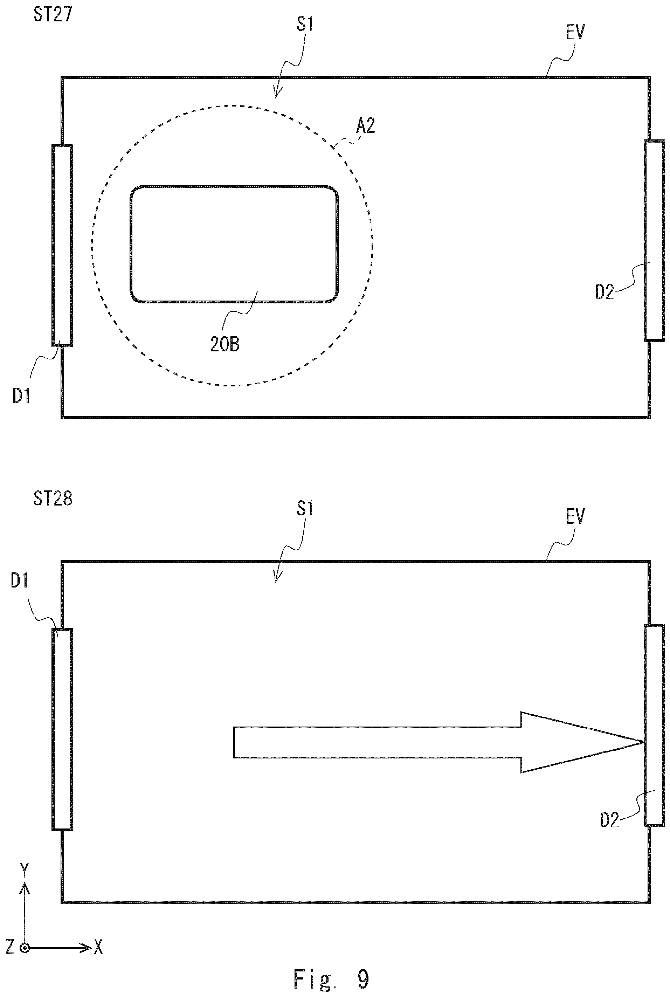

Procedures according to the modified example (ST21 to ST28) are described with reference to Fig. 6 to Fig. 9. In the modified example, the mobile robots 20 ride an elevator in which doors are provided at both sides. Fig. 6 to Fig. 9 are top views showing the inside of the elevator EV. Fig. 6 to Fig. 9 show the two mobile robots 20 as the mobile robots 20A and 20B. The door D1 is provided at one end of the elevator EV and a door D2 is provided at the other end. The door D1 is installed at the end at the -X side of the elevator EV, and the door D2 is installed at the end at the +X side. For example, it is assumed that it is determined which of the door D1 or D2 opens on each floor.

Here, a case will be described in which the mobile robots 20A and 20B enter the elevator EV via the door D1 and exit the elevator EV via the door D2. The door D1 is the entrance to the standby region S1 and the door D2 is the exit, but the opposite may be true. Note that since a basic configuration and control of the mobile robots 20A and 20B are similar to those in Fig. 3 to Fig. 5, description thereof is omitted as appropriate.

The procedures will be described of the mobile robot 20B getting on the elevator EV after the mobile robot 20A has gotten on the elevator EV. The mobile robot 20A passes through the door D1 and enters the elevator EV (ST21). At this time, the mobile robot 20A is moving straight ahead in the +X direction in a state in which the X direction is the longitudinal direction. The mobile robot 20A advances to the most inner side of the elevator EV, in other words, to the end at the +X side. When the mobile robot 20A is moving straight ahead, the virtual bumper region A1 of the mobile robot 20A is rectangular with the X direction as the longitudinal direction in the top view.

When the mobile robot 20A moves to the predetermined standby position, the mobile robot 20A pivots in place (ST22). In other words, the left and right drive wheels 261 rotate in opposite directions at the same rotation speed. The mobile robot 20A rotates 90° around the pivot axis parallel to the Z direction so that the longitudinal direction of the mobile robot 20A extends along the Y direction. The mobile robot 20A pivots until the longitudinal direction of the mobile robot 20A is the Y direction and the lateral direction is the X direction. When pivoting, the virtual bumper region A1 is circular with the pivot axis as its center. When the mobile robot 20A has rotated 90°, the drive wheels stop operating. The mobile robot 20A stands by in the state shown in ST22.

When the mobile robot 20A is stopped, the mobile robot 20B passes through the door D1 and enters the elevator EV (ST23). At this time, the mobile robot 20B is moving straight ahead in the +X direction in a state in which the X direction is the longitudinal direction. When moving straight ahead, the virtual bumper region A2 of the mobile robot 20B is rectangular with the X direction as the longitudinal direction in the top view. Since the mobile robot 20A is stopped, the virtual bumper region A1 is rectangular with the Y direction as the longitudinal direction. When the mobile robot 20B moves straight ahead to the predetermined standby position, the mobile robot 20B stops.

When the mobile robot 20B moves to the predetermined standby position, the mobile robot 20B pivots in place (ST24). In other words, the left and right drive wheels 261 rotate in opposite directions at the same rotation speed. The mobile robot 20B rotates 90° around the pivot axis parallel to the Z direction so that the longitudinal direction extends along the Y direction. The mobile robot 20B pivots until the longitudinal direction of the mobile robot 20B is the Y direction and the lateral direction is the X direction. When pivoting, the virtual bumper region A2 is circular with the pivot axis as its center. When the mobile robot 20B has rotated 90°, the drive wheels stop operating. The mobile robot 20B stands by in the state shown in ST24. Therefore, the longitudinal directions of the mobile robots 20A and 20B are parallel to the Y direction.

The mobile robot 20A pivots in place (ST25). The mobile robot 20A rotates 90° around the pivot axis parallel to the Z direction so that the longitudinal direction extends along the X direction. The mobile robot 20A pivots until the longitudinal direction of the mobile robot 20A is the X direction and the lateral direction is the Y direction. When pivoting, the virtual bumper region A1 is circular with the pivot axis as its center. When the mobile robot 20A has rotated 90°, the drive wheels stop operating. The mobile robot 20B stands by in the state shown in ST25. Therefore, the longitudinal direction of the mobile robot 20A is the X direction and the longitudinal direction of the mobile robot 20B is parallel to the Y direction. When the pivot operation of the mobile robot 20A has ended or when the mobile robot 20B has entered the elevator EV, the elevator EV ascends or descends. While the elevator EV is ascending or descending, the mobile robot 20A stands by in a state in which the longitudinal direction of the mobile robot 20A extends along the X direction and the mobile robot 20B stands by in a state in which the lateral direction of the mobile robot 20B extends along the X direction.

When the elevator EV is ascending or descending and arrives at the destination floor of the mobile robot 20A, the door D2 opens. The mobile robot 20A then moves straight ahead in the +X direction. In other words, the mobile robot 20A exits the elevator EV through the door D2 (ST26).

The mobile robot 20B pivots while or after the mobile robot 20A exits (ST27). When pivoting, the virtual bumper region A2 of the mobile robot 20B is circular. The mobile robot 20B moves straight ahead in the +X direction after the mobile robot 20B pivots 90°. In other words, the mobile robot 20B moves in the +X direction in a state in which the longitudinal direction has become parallel to the X direction. With this, the mobile robot 20B exits the elevator EV through the door D2 (ST28). When the mobile robot 20B is moving straight ahead, the virtual bumper region A2 is rectangular.

In this way, it is possible to prevent the mobile robot 20A and the mobile robot 20B from approaching each other. Since positional errors occur in the autonomous movement of the mobile robots 20A and 20B, the standby positions of the mobile robot 20A and the mobile robot 20B shift out of place with each elevator ride. Therefore, there is a case in which the mobile robot 20A and the mobile robot 20B approach each other more than an expected distance. The distance between the robots can be prevented from being smaller than a threshold value distance in such a case as well. The distance between the mobile robot 20A and the mobile robot 20B can be made wider. With this, contact between the mobile robots can be prevented. It is also possible to prevent the robots from stopping or decelerating due to the virtual bumper function and the like. Furthermore, the plurality of mobile robots 20 can ride the elevator even when the area of the internal space of the elevator EV is small.

In the above description, the mobile robots 20A and 20B are rectangular in the top view but may be a shape other than rectangular. In other words, the mobile robots 20A and 20B should have a shape that has a longitudinal direction and a lateral direction in the top view. For example, the mobile robots 20A and 20B may be elliptical in the top view. In the top view, the mobile robots 20A and 20B need not be rotationally symmetrical. The front-rear direction of the mobile robots 20 is the longitudinal direction but may also be the lateral direction.

In the above description, the two mobile robots 20A and 20B entered the standby region S1, but three or more mobile robots 20 may enter the standby region S1. In this case, the mobile robots 20 should perform the pivot operation so that the longitudinal direction and the lateral direction of adjacent mobile robots 20 are parallel. To be specific, when three or more mobile robots 20 stand by in one row, the lateral direction of the odd-numbered mobile robots 20 should be parallel to the X direction and the longitudinal direction of the even-numbered mobile robots 20 should be parallel to the X direction. The mobile robots 20 with parallel longitudinal directions should be disposed so that these mobile robots 20 are not adjacent to each other.

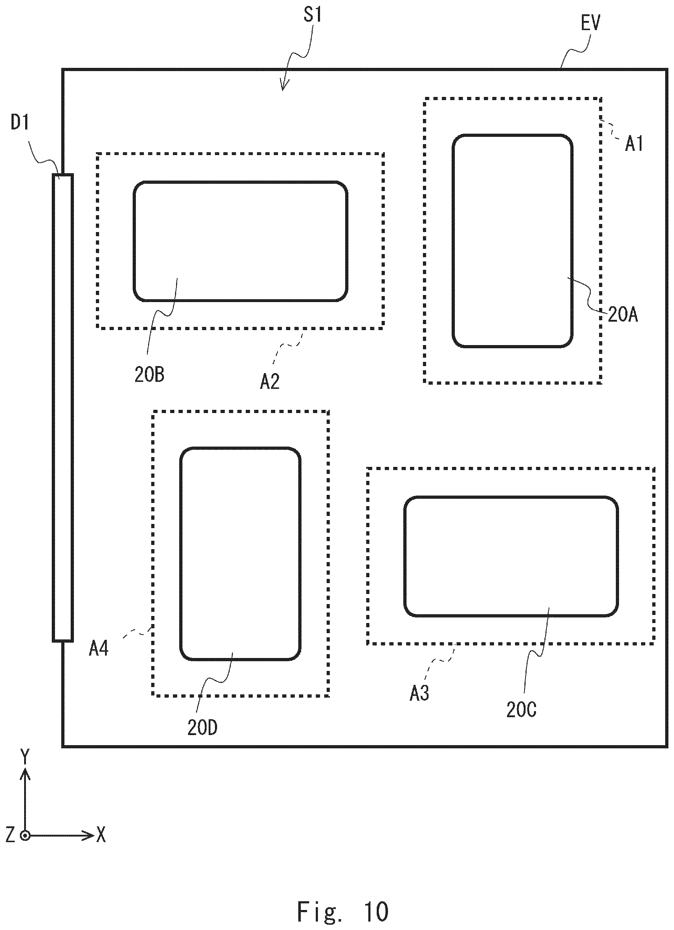

When four or more mobile robots 20 are standing by in the standby region S1 in two or more rows, the mobile robots 20 should be in a staggered arrangement. Fig. 10 is a top view showing a state in which four mobile robots 20A to 20D are riding the elevator. As shown in Fig. 10, virtual bumper regions A1 to A4 are respectively set for the mobile robots 20A to 20D.

Longitudinal directions of the mobile robots 20A and 20D are the Y direction and longitudinal directions of the mobile robots 20B and 20C are the X direction. Accordingly, adjacent mobile robots are oriented differently from each other at a 90° angle in the X direction or the Y direction.

In this way, for the mobile robots in the odd-numbered row, the lateral direction of the odd-numbered mobile robot is parallel to the X direction and the longitudinal direction of the even-numbered mobile robot 20 is parallel to the X direction. For the mobile robots in the even-numbered row, the longitudinal direction of the odd-numbered mobile robot is parallel to the X direction and the lateral direction of the even-numbered mobile robot 20 is parallel to the X direction. The mobile robots 20 with parallel longitudinal directions should be disposed is a diagonal arrangement. With this, the distance between adjacent mobile robots can be made wider. Accordingly, stacks caused by the virtual bumper function can be prevented. It is also possible to improve usage efficiency of the space in the standby region S1.

A control method according to the present embodiment may be performed at the host management apparatus 10 or at an edge device (mobile robot 20). The mobile robot 20 and the host management apparatus 10 may execute the control method in corporation with each other. In other words, the control system according to the present embodiment may be installed in the mobile robot 20. Alternatively, at least a part or an entirety of the control system may be installed in an apparatus other than the mobile robot 20, for example, in the host management apparatus 10.

For example, the host management apparatus 10 may control two or more mobile robots 20. In this case, the host management apparatus 10 obtains information relating to a status, a schedule, or the like of the mobile robot 20B. The host management apparatus 10 then transmits, to the mobile robots 20A and 20B, a signal for controlling the mobile robots 20A and 20B. In this way, it is possible to control the mobile robots 20A and 20B as described above.

Alternatively, at least one of the mobile robot 20B or the host management apparatus 10 may control the mobile robot 20A. For example, the mobile robot 20A transmits, to the host management apparatus 10, information relating to a status or a schedule of the mobile robot 20A. Alternatively, the mobile robot 20B or the host management apparatus 10 senses the state of the mobile robot 20A. The host management apparatus 10 then transmits, to the mobile robot 20A, a signal for controlling the mobile robot 20A. Alternatively, the mobile robot 20B transmits a signal for controlling the mobile robot 20A directly or indirectly to the mobile robot 20A. In this way, it is possible to control the mobile robots 20A and 20B as described above.

At least one of the mobile robot 20A or the host management apparatus 10 may control the mobile robot 20B. For example, the mobile robot 20B transmits, to the host management apparatus 10, information relating to a status or a schedule of the mobile robot 20B. Alternatively, the mobile robot 20A or the host management apparatus 10 senses the state of the mobile robot 20B. The host management apparatus 10 then transmits, to the mobile robot 20B, a signal for controlling the mobile robot 20B. Alternatively, the mobile robot 20A transmits a signal for controlling the mobile robot 20B directly or indirectly to the mobile robot 20B. In this way, it is possible to control the mobile robots 20A and 20B as described above.

The host management apparatus 10 is not limited to a single physical apparatus, and may instead be disposed as a plurality of apparatuses in a distributed manner. In other words, the host management apparatus 10 may include a plurality of memories, a plurality of processors, and the like. Control may be performed by using a machine learning model generated through supervised learning or the like. For example, a machine learning model may be used for processing such as route searching and object detection.

A part of an entirety of the above-described processing in the host management apparatus 10, the mobile robot 20, or the like can be realized as a computer program. Such a program can be stored using various types of non-transitory computer-readable media and provided to a computer. Non-transitory computer-readable media include various types of tangible storage media. Examples of non-transitory computer-readable media include magnetic storage media (for example, floppy disks, magnetic tapes, or hard disk drives), optical magnetic storage media (for example, magneto-optical disks), CD-ROM (read-only memory), CD-R, CD-R/W, and semiconductor memories (for example, mask ROM, PROM (programmable ROM), EPROM (erasable PROM), or flash ROM, RAM (random-access memory)). The program may be provided to a computer through various types of transitory computer-readable media. Examples of transitory computer-readable media include electric signals, optical signals, and electromagnetic waves. Transitory computer-readable media can provide the program to a computer via a wired communication line (such as an electric wires or optical fiber) or a wireless communication line.

Note that the present invention is not limited to the above embodiment, and can be appropriately modified without departing from the gist of the present invention. For example, a system in which a transport robot moves autonomously in a hospital has been described in the above embodiment, but the above-described system can transport predetermined conveyed items in a hotel, a restaurant, an office building, an event venue, or a complex facility as luggage.

This application is based upon and claims the benefit of priority from Japanese Patent Application No. 2022-182407 filed on November 15, 2022, the disclosure of which is incorporated herein in its entirety by reference.

### Reference Signs List

- 1: CONTROL SYSTEM
- 10: HOST MANAGEMENT APPARATUS
- 20: MOBILE ROBOT
- 21: ARITHMETIC PROCESSING UNIT
- 22: STORAGE UNIT
- 23: COMMUNICATION UNIT
- 24: DISTANCE SENSOR GROUP
- 25: CAMERA
- 26: DRIVE UNIT
- 27: DISPLAY PART
- 28: OPERATION RECEPTION PART
- 211: MOVEMENT COMMAND EXTRACTION UNIT
- 212: DRIVE CONTROL UNIT
- 218: VIRTUAL BUMPER SETTING UNIT
- 219: OBJECT DETECTION UNIT
- 221: FLOOR MAP
- 222: ROBOT CONTROL PARAMETER
- 226: CONVEYED ITEM INFORMATION
- 241: FRONT-REAR DISTANCE SENSOR
- 242: LEFT-RIGHT DISTANCE SENSOR
- 260: CARRIAGE PORTION
- 261: DRIVE WHEEL
- 262: CASTER
- 281: OPERATION INTERFACE
- 290: MAIN BODY PORTION
- 291: STORAGE
- 292: DOOR

## Claims

1. A robot control system configured to control a plurality of mobile robots each having a longitudinal direction and a lateral direction in a top view, wherein the robot control system:
controls a first mobile robot configured to enter a preset standby region to stand by in the standby region, after the first mobile robot has pivoted so that the lateral direction extends along a first direction; and
controls a second mobile robot configured to enter the standby region that the first mobile robot has entered to stand by in a state in which the longitudinal direction extends along the first direction.

2. The robot control system according to claim 1, wherein a virtual bumper is set for each of the first mobile robot and the second mobile robot so as to cause the first mobile robot and the second mobile robot to decelerate or stop when an object or a person has approached within a preset distance.

3. The robot control system according to claim 1 or 2, wherein the mobile robots each include wheels for allowing the mobile robots to move with the longitudinal direction as a front-rear direction.

4. The robot control system according to any one of claims 1 to 3,
wherein
an entrance/exit is set at one end side of the standby region,
the first mobile robot enters the standby region by advancing along the first direction,
the first mobile robot pivots so that the lateral direction extends along the first direction, after the first mobile robot has entered the standby region, and
the second mobile robot enters the standby region by advancing along the first direction, after the first mobile robot has pivoted.

5. The robot control system according to any one of claims 1 to 4,
wherein
an entrance is set at one end side of the standby region and an exit is set at the other end side,
the first mobile robot enters the standby region by advancing along a second direction different from the first direction,
the first mobile robot pivots so that the longitudinal direction extends along the first direction, after the first mobile robot has entered the standby region,
the second mobile robot enters the standby region by advancing along the second direction in a state in which the first mobile robot is disposed with the longitudinal direction of the first mobile robot extending along the first direction, and
the first mobile robot pivots so that the lateral direction extends along the first direction, after the second mobile robot has entered the standby region.

6. The robot control system according to any one of claims 1 to 5, wherein the standby region is a car of an elevator.

7. The robot control system according to any one of claims 1 to 6, comprising a host management apparatus configured to control the first mobile robot and the second mobile robot.

8. The robot control system according to any one of claims 1 to 7, wherein the first mobile robot transmits a signal for controlling the second mobile robot.

9. The robot control system according to any one of claims 1 to 8, wherein the second mobile robot transmits a signal for controlling the first mobile robot.

10. A robot control method executed by at least one computer for controlling a plurality of mobile robots each having a longitudinal direction and a lateral direction in a top view, the robot control method comprising:
controlling a first mobile robot configured to enter a preset standby region to stand by in the standby region, after the first mobile robot has pivoted so that the lateral direction extends along a first direction; and
controlling a second mobile robot configured to enter the standby region that the first mobile robot has entered to stand by in a state in which the longitudinal direction extends along the first direction.

11. The robot control method according to claim 10, wherein a virtual bumper is set for each of the first mobile robot and the second mobile robot so as to cause the first mobile robot and the second mobile robot to decelerate or stop when an object or a person has approached within a preset distance.

12. The robot control method according to claim 10 or 11, wherein the mobile robots each include wheels for allowing the mobile robots to move with the longitudinal direction as a front-rear direction.

13. The robot control method according to any one of claims 10 to 12, wherein
an entrance/exit is set at one end side of the standby region,
the first mobile robot enters the standby region by advancing along the first direction,
the first mobile robot pivots so that the lateral direction extends along the first direction, after the first mobile robot has entered the standby region, and
the second mobile robot enters the standby region by advancing along the first direction, after the first mobile robot has pivoted.

14. The robot control method according to any one of claims 10 to 13, wherein
an entrance is set at one end side of the standby region and an exit is set at the other end side,
the first mobile robot enters the standby region by advancing along a second direction different from the first direction,
the first mobile robot pivots so that the longitudinal direction extends along the first direction, after the first mobile robot has entered the standby region,
the second mobile robot enters the standby region by advancing along the second direction in a state in which the first mobile robot is disposed with the longitudinal direction of the first mobile robot extending along the first direction, and
the first mobile robot pivots so that the lateral direction extends along the first direction, after the second mobile robot has entered the standby region.

15. The robot control method according to any one of claims 10 to 14, wherein the standby region is a car of an elevator.

16. The robot control method according to any one of claims 10 to 15, wherein the computer is a host management apparatus configured to control the first mobile robot and the second mobile robot.

17. The robot control method according to any one of claims 10 to 16, wherein the first mobile robot transmits a signal for controlling the second mobile robot.

18. The robot control method according to any one of claims 10 to 17, wherein the second mobile robot transmits a signal for controlling the first mobile robot.

19. A program configured to cause a computer to execute a robot control method for controlling a plurality of mobile robots each having a longitudinal direction and a lateral direction in a top view, the robot control method comprising:
controlling a first mobile robot configured to enter a preset standby region to stand by in the standby region, after the first mobile robot has pivoted so that the lateral direction extends along a first direction; and
controlling a second mobile robot configured to enter the standby region that the first mobile robot has entered to stand by in a state in which the longitudinal direction extends along the first direction.

20. The program according to claim 19, wherein a virtual bumper is set for each of the first mobile robot and the second mobile robot so as to cause the first mobile robot and the second mobile robot to decelerate or stop when an object or a person has approached within a preset distance.

21. The program according to claim 19 or 20, wherein the mobile robots each include wheels for allowing the mobile robots to move with the longitudinal direction as a front-rear direction.

22. The program according to any one of claims 19 to 21, wherein
an entrance/exit is set at one end side of the standby region,
the first mobile robot enters the standby region by advancing along the first direction,
the first mobile robot pivots so that the lateral direction extends along the first direction, after the first mobile robot has entered the standby region, and
the second mobile robot enters the standby region by advancing along the first direction, after the first mobile robot has pivoted.

23. The program according to any one of claims 19 to 22, wherein
an entrance is set at one end side of the standby region and an exit is set at the other end side,
the first mobile robot enters the standby region by advancing along a second direction different from the first direction,
the first mobile robot pivots so that the longitudinal direction extends along the first direction, after the first mobile robot has entered the standby region,
the second mobile robot enters the standby region by advancing along the second direction in a state in which the first mobile robot is disposed with the longitudinal direction of the first mobile robot extending along the first direction, and
the first mobile robot pivots so that the lateral direction extends along the first direction, after the second mobile robot has entered the standby region.

24. The program according to any one of claims 19 to 23, wherein the standby region is a car of an elevator.

25. The program according to any one of claims 19 to 24, wherein the computer is a host management apparatus configured to control the first mobile robot and the second mobile robot.

26. The program according to any one of claims 19 to 25, wherein the first mobile robot transmits a signal for controlling the second mobile robot.

27. The program according to any one of claims 19 to 26, wherein the second mobile robot transmits a signal for controlling the first mobile robot.
